# EUROPEAN PATENT APPLICATION

(11) **EP 4 775 925 A1**
(43) Date of publication of application: **15.07.2026**
(21) Application number: 26151112.5
(22) Date of filing: 09.01.2026
(51) Int. Cl.: G01B 11/06

(54) **DUAL COMB SPECTROSCOPY FOR WEB THICKNESS MEASUREMENT**

(30) Priority: 12.01.2025 US 202563744299 P; 09.12.2025 US 202519413991
(71) Applicant: Honeywell International Inc., Charlotte, NC 28202 (US)
(72) Inventor: HUGHES, Michael, Charlotte, 28202 (US)
(74) Representative: Haseltine Lake Kempner LLP

(57) **Abstract**

The present disclosure provides a method comprising generating, by a dual frequency comb source, a first optical frequency comb having a first repetition rate and a second optical frequency comb having a second repetition rate that is different from the first repetition rate. The method includes directing, using one or more optical elements, one or more of the first optical frequency comb or the second optical frequency comb toward a material. The method includes detecting, using a diode photodetector, optical signals from the first optical frequency comb and the second optical frequency comb after interaction of one or more of the first optical frequency comb or the second optical frequency comb with the material. The method includes generating, using the diode photodetector, a radio frequency signal corresponding to the optical signals. The method includes determining a thickness of the material based on the radio frequency signal.

## Description

### CROSS REFERENCE TO RELATED APPLICATIONS

This application claims priority to U.S. Provisional Patent Application No. 63/744,299, filed on January 12, 2025, which is incorporated herein by reference in its entirety.

### TECHNICAL FIELD

Embodiments of the present disclosure generally relate to material thickness measurement techniques, and, more particularly, to dual comb spectroscopy techniques for web thickness measurements. An example embodiment relates to systems, apparatuses, and methods for web thickness measurements such as flat sheet thickness measurements.

### BACKGROUND

Applicant has identified many technical challenges associated with material thickness measurement, such as flat sheet thickness measurement. Through applied effort, ingenuity, and innovation, Applicant has solved problems related to material measurement by developing solutions that are included in embodiments of the present disclosure, many examples of which are described in detail herein.

### SUMMARY

Various embodiments of the present disclosure generally relate to material thickness measurement techniques, and, more particularly, to dual comb spectroscopy techniques for material thickness measurements.

According to an aspect of the present disclosure, a computer-implemented method is provided. In some embodiments, the method includes generating, by a dual frequency comb source, a first optical frequency comb having a first repetition rate and a second optical frequency comb having a second repetition rate that is different from the first repetition rate. The method includes directing, using one or more optical elements, one or more of the first optical frequency comb or the second optical frequency comb toward a material. The method includes detecting, using a diode photodetector, optical signals from the first optical frequency comb and the second optical frequency comb after interaction of one or more of the first optical frequency comb or the second optical frequency comb with the material. The method includes generating, using the diode photodetector, a radio frequency (RF) signal corresponding to the optical signals. The method includes determining a thickness of the material based on the RF signal.

According to other aspects of the present disclosure, the computer-implemented method may include one or more of the following features. Determining the thickness of the material may include extracting spectral information from the RF signal, wherein the spectral information comprises one or more of interference fringe pattern or absorption features, and determining the thickness based on the spectral information. Directing the one or more of the first optical frequency comb or the second optical frequency comb toward the material may include propagating both the first optical frequency comb and the second optical frequency comb through the material. Directing the one or more of the first optical frequency comb or the second optical frequency comb toward the material may include combining the first optical frequency comb and the second optical frequency comb and directing the combined optical frequency combs towards the material. In some embodiments, the dual frequency comb source may be positioned on a first side relative to the material, and the diode photodetector may be positioned on a second side relative to the material. In some embodiments, the dual frequency comb source and the diode photodetector may both be positioned on a first side relative to the material. In some embodiments, one or more of the first optical frequency comb or the second optical frequency comb may operate in a wavelength range of 1-2 microns. One or more of the first optical frequency comb or the second optical frequency comb may operate in a wavelength range of 2-9 microns. In some embodiments, the dual frequency comb source may be a fiber-based source. In some embodiments, the dual frequency comb source may be a photonic chip-based source. The photonic chip-based source may comprise one or more silicon nitride waveguides. The first optical frequency comb and the second optical frequency comb may be generated by a dual frequency comb spectrometer comprising the dual frequency comb source. Determining the thickness may include applying an algorithm configured to select one of an interference-based measurement or absorption-based measurement. In response to a selection that indicates interference-based measurement, the example method may include applying one or more interference algorithms to the RF signal, wherein the one or more interference algorithms is configured to identify interference fringes reflected within the RF signal, and analyzing the interference fringes to determine the thickness of the material. In response to a selection that indicates absorption-based measurement, the method may include applying one or more absorption algorithms to the RF signal, wherein the one or more absorption algorithms is configured to identify absorption features from the RF signal, and analyzing the absorption features to determine the thickness of the material.

According to another aspect of the present disclosure, a system is provided. The system includes a device configured to generate a first optical frequency comb having a first repetition rate and a second optical frequency comb having a second repetition rate that is different from the first repetition rate. The system includes one or more optical components configured to direct one or more of the first optical frequency comb or the second optical frequency comb toward a material. The system includes a diode photodetector configured to detect optical signals from the first optical frequency comb and the second optical frequency comb after interaction of one or more of the first optical frequency comb or the second optical frequency comb with the material and generate a RF signal corresponding to the optical signals. The system comprises a signal processor configured to determine the thickness of the material based on the RF signal.

According to other aspects of the present disclosure, the system may include one or more of the following features. Determining the thickness of the material may comprise extracting spectral information from the RF signal, wherein the spectral information includes one or more of interference fringe pattern or absorption features, and determining the thickness based on the spectral information. Directing the one or more of the first optical frequency comb or the second optical frequency comb toward the material may comprise propagating both the first optical frequency comb and the second optical frequency comb through the material. Directing the one or more of the first optical frequency comb or the second optical frequency comb toward the material may include combining the first optical frequency comb and the second optical frequency comb and directing the combined optical frequency combs towards the material. The dual frequency comb source may be positioned on a first side relative to the material, and the diode photodetector may be positioned on a second side relative to the material.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE FIGURES

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A illustrates an example scanner incorporating dual frequency comb measurement for material thickness measurement in accordance with at least some example embodiments of the present disclosure.
FIG. 1B, illustrates an example dual frequency comb measurement system in accordance with at least some example embodiments of the present disclosure.
FIGS. 2A-B illustrate frequency domains in accordance with at least some example embodiments of the present disclosure.
FIGS. 3A-C illustrate dual comb interference fringes in accordance with at least some example embodiments of the present disclosure.
FIG. 3D illustrates example absorption spectra and features in accordance with at least some example embodiments of the present disclosure.
FIG. 4 illustrates a block diagram of an example apparatus in accordance with at least some example embodiments of the present disclosure.
FIG. 5 illustrates an example process for material thickness measurement using dual frequency comb spectroscopy techniques in accordance with at least some example embodiments of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electrically connected," "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. The term "element" may refer to an article, a device, or an apparatus that may provide one or more functionalities.

The terms "computing entity," "device," "system," and/or similar words used herein interchangeably may refer to, for example, one or more computers, computing entities, desktop computers, mobile phones, tablets, phablets, notebooks, laptops, distributed systems, products/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the apparatus 400 embodies a particular, specially configured computing entity transformed to enable the specific operations described herein and provide the specific advantages associated therewith, as described herein.

The term "circuitry" refers to hardware-only circuit implementations (e.g., implementations in analog circuitry and/or digital circuitry); combinations of circuits and one or more computer program products that comprise software and/or firmware instructions stored on one or more computer readable memory devices that work together to cause an apparatus to perform one or more functions described herein; or integrated circuits, for example, a processor, a plurality of processors, a portion of a single processor, a multicore processor, that requires software or firmware for operation even if the software or firmware is not physically present. This definition of "circuitry" applies to all uses of this term herein, including in any claims. Additionally, the term "circuitry" may refer to purpose-built circuits fixed to one or more circuit boards, for example, a baseband integrated circuit, a cellular network device or other connectivity device (e.g., Wi-Fi card, Bluetooth circuit, etc.), a sound card, a video card, a motherboard, and/or other computing device. Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like.

### Overview

Various embodiments of the present disclosure address technical challenges associated with material measurement, including flat sheet thickness measurement. Conventional measurement techniques often require cost-prohibitive components and techniques, which create significant cost barriers for widespread industrial implementation. Additionally, conventional measurement systems often lack the accuracy and measurement speed for real-time monitoring of moving materials during manufacturing processes, with measurement times that are too slow for continuous production line monitoring. Moreover, existing measurement systems often require complex optical configurations and lack the portability and integration capabilities needed for diverse industrial applications.

Various embodiments address these technical challenges by providing systems, devices, and methods that apply dual frequency comb (DFCS) techniques for interferometric and absorption spectroscopic thickness measurements of flat sheet or other materials. In various embodiments, dual frequency combs are generated in the range of about 1-9 microns. 1-2 microns may be generated with a base system and 2-9 microns may be generated by extending the wavelength range using nonlinear wavelength conversion. In various embodiments, dual frequency combs are generated in the range of about 2-4 microns. In various embodiments, dual frequency combs are generated in the range of about 3-6 microns. In various embodiments, dual frequency combs are generated in the range of about 4.5-9 microns. A frequency comb may comprise a beam formed of a number of synchronized discrete and narrow wavelengths. In some embodiments, one of the frequency combs is passed through the material to be measured (e.g., flat sheet to be measured). The frequency comb may interact with the material in reflection or transmission. In some embodiments, the frequency comb/light beam is collected and mixed with the light from the other synchronized comb. The frequencies of the other comb may be slightly different. When the combs/two light beams mix, an RF signal is generated and may be measured at the difference frequencies. In some embodiments, the RF signal may be measured with a diode at the difference frequencies.

Some embodiments provide flat sheet measurement techniques that comprise directing a first optical frequency comb light of dual frequency comb at the sheet and interfering with the second optical frequency comb with wavelength repetition rate offset. Example embodiments measure the radio frequency (RF) generated with RF diode and calculate or otherwise determine the thickness of the flat sheet based on the RF. For example, some embodiments, evaluate the RF signal to determine interference spectrum and/or absorption spectrum, and calculate or otherwise determine the thickness of the sheet based on the interference determination. In this regard, some embodiments calculate or otherwise determine thickness of a sheet (or other material) based on interference fringes. Some embodiments, leverage a specially configured algorithm to determine whether the sheet should be measured using interference or absorption.

Some embodiments calculate or otherwise determine the thickness of a sheet (or other material) based on absorption. Some embodiments, direct both combs of the dual frequency comb through the sheet at substantially the same time. In some embodiments, the sheet is positioned between the dual frequency comb source and a detector. In such some embodiments, a first side of the sheet may face the dual frequency comb source and a second side of the sheet may face the detector. In some embodiments, the detector is positioned on the same side of the sheet at the dual frequency comb source. In some embodiments, the comb source is fiber based. In some embodiments, the comb source is a photonic chip. In some embodiments, the sheet to be measured is a moving sheet. In some embodiments, the sheet is a moving sheet in machine direction (MD) with scanner in cross direction (CD). In some embodiments, multiple thin layers may be detected.

Example embodiments of the present disclosure provide several technical advantages. The dual frequency comb approach provides broad spectral coverage spanning hundreds of nanometers or greater, enabling simultaneous measurement of multiple material properties including thickness, composition, and moisture content with a single measurement system. This comprehensive characterization capability reduces or obviates the need for multiple separate measurement instruments and provides more complete material analysis. Some example embodiments achieve high measurement speeds (e.g., compared to existing web/sheet thickness measurements systems), enabling real-time monitoring of moving web materials (flat sheet or the like) during manufacturing processes without interrupting production flow. Some example embodiments utilize photodetection rather than complex imaging optics, reducing system cost and complexity while maintaining high measurement accuracy. The dual frequency comb technique provides high spectral resolution and sensitivity to material absorption characteristics in both near-infrared and infrared wavelength ranges, enabling precise detection of thickness variations and material property changes. Some embodiments include automatic selection between interference-based and absorption-based measurement techniques, thus optimizing measurement accuracy for different material types and thickness ranges without manual intervention. The compact photonic chip-based implementation offers potential for significant reductions in size, weight, power consumption, and manufacturing cost compared to conventional measurement systems, enabling portable and cost-effective deployment in various industrial applications. These technical advantages collectively contribute to improved material thickness measurement techniques, devices, and systems that provides comprehensive, rapid, and cost-effective material characterization capabilities for web/sheet manufacturing applications.

### Example Systems of the Disclosure

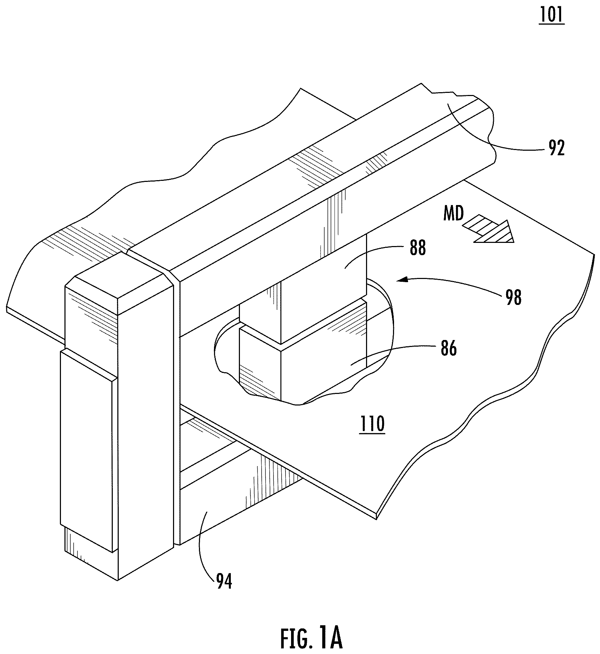

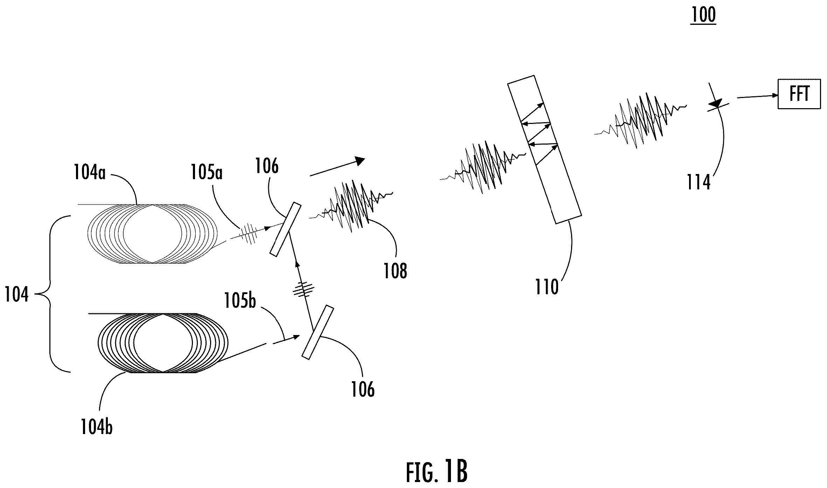

FIG. 1A illustrates a scanner 101 in accordance with at least some example embodiments of the present disclosure. FIG. 1B illustrates a dual frequency comb measurement system 100 in accordance with at least some example embodiments of the present disclosure. In some embodiments, the dual frequency comb measurement system 100 (or portion thereof) is incorporated and/or embodied by a device such as scanner 101. It would be appreciated that the configuration of the scanner 101 depicted in FIG. 1A is not intended to be limiting. In some embodiments, the scanner 101 may comprise other configurations. For example, the scanner 101 may exclude one or more of the components depicted in FIG. 1A and/or may include one or more other components not depicted in FIG. 1A.

The dual frequency comb measurement system 100 may be configured to provide measurement capabilities that enable comprehensive characterization of materials, including thickness measurements of webs during manufacturing processes. A web may comprise a continuous sheet of material including, but not limited to, plastic films, polymer sheets, paper, textiles, or other flat sheet products. The manufacturing processes may comprise industrial production operations involved in creating web materials through continuous or batch processing methods. The manufacturing processes may include the formation, treatment, and handling of web materials as they move through production equipment. The manufacturing process may involve multiple stages such as material preparation, web formation, coating, drying, cooling, and/or winding operations. During the manufacturing process, real-time monitoring and control of material properties such as thickness, composition, and moisture content may be performed via a device such as the scanner 101 (e.g., dual frequency comb measurement system 100 thereof) to maintain product quality specifications and optimize production efficiency.

The dual frequency comb measurement system 100 may be configured to scan across the material in a cross-direction while the material moves in a machine direction, providing spatial mapping of material properties across the full width of the material. The cross-direction scanning capability may enable detection of thickness variations, composition changes, and other material property variations that may occur across the width of the material during manufacturing.

The cross-direction scanning may be implemented through mechanical positioning systems that move one or more optical components across the width of the material while the material continues to move in the machine direction. The scanning system (such as scanner 101 embodying the dual frequency comb measurement system 100) may comprise motorized translation stages, rotating mirror systems, or other beam steering mechanisms that direct frequency comb light (e.g., optical frequency comb), as further described herein, to different positions across the material width. The scanning rate may be coordinated with the material speed to ensure adequate measurement coverage and spatial resolution across the material surface.

The machine direction movement of the material may be accommodated through continuous measurement capabilities that track material properties as the material passes through the measurement zone. The dual frequency comb measurement system 100 may provide rapid measurement speeds that enable multiple measurements per unit length of material, creating a two-dimensional map of material properties across both the machine direction and cross-direction dimensions. The combination of cross-direction scanning and machine direction web movement may enable comprehensive quality monitoring of the material surface.

The scanning configuration may provide enhanced process control capabilities for material manufacturing applications. Cross-direction thickness variations may indicate issues with manufacturing equipment such as die lip adjustments, temperature variations, or material flow irregularities. The thickness measurements may provide feedback for automatic process control systems that adjust manufacturing parameters to maintain uniform material properties across the material width. The spatial resolution of the thickness measurements may be optimized to detect localized defects or variations while maintaining sufficient measurement speed for continuous monitoring.

In this regard, in some embodiments, the dual frequency comb measurement system 100 (or portion thereof) may be embodied by a device, such as scanner 101, with the material moving in the scanner direction in between scanner heads (as described further below) which move synchronously in the cross direction. The scanner 101 (e.g., via dual frequency comb measurement system 100 thereof) may be configured to generate a thickness map of the material as the material is being produced.

In some embodiments, the scanner 101 comprises or otherwise represents a measurement device (or apparatus) configured to perform thickness measurements (e.g., continuous thickness measurements or periodic thickness measurements) of moving material, such as material 110, during manufacturing (e.g., production) of the material. In some embodiments, the material 110 comprises a flat sheet such as plastic films, polymer sheets, paper, textiles, or other flat sheet products, as described above. In some embodiments, the scanner 101 may be configured to traverse across the entire width of a moving material 110 to perform thickness measurement (e.g., continuous or periodic thickness measurements of the material 110). The scanner 101 may comprise one or more scanner heads 98 that move repeatedly back and forth in a cross direction (CD) perpendicular to the machine direction (MD) of the moving material 110, enabling measurement of the entire width of the material 110 or at least substantially the entire width of material 110.

The cross direction may comprise the direction perpendicular to the machine direction of a moving material 110. The cross direction may represent the width dimension of the material 110, wherein thickness measurements may be performed by moving the one or more scanner heads 98 back and forth across the cross direction to obtain thickness measurements across the entire width (or at least across substantially the entire width) of the material. The machine direction may comprise the primary direction of movement of the material 110 through the scanner, for example, during manufacturing. The machine direction may correspond to the length dimension of the material as it moves through the scanner 101 or manufacturing process.

The scanner 101 may incorporate dual frequency comb spectroscopy components such as optical frequency comb source(s), diode photodetector(s), optical element(s), and/or signal processing elements(s) (e.g., signal processing electronics) for performing interferometric and/or absorption-based thickness measurements. In some embodiments, the dual frequency comb measurement system 100 (or portion thereof) is incorporated into the one or more scanner heads 98. In this regard, in some embodiments, the one or more scanner heads 98 may house one or more measurement components including one or more dual frequency comb spectroscopy components and may be configured to move across the width of the material 110 (or at least substantially across the width of a material). In some embodiments, the one or more scanner heads 98 may include frequency comb source(s), diode photodetector(s), optical elements(s) for beam shaping and directing, diode photodetectors, and/or signal processing element(s).

In some embodiments, the one or more scanner heads 98 comprises multiple scanner heads. In such some embodiments, the one or more scanner heads 98 may comprise a first scanner head 88 and a second scanner head 86 employed in a synchronized manner, with the first scanner head 88 and the second scanner head 86 positioned on opposite sides of the material 110 to define a measurement gap through which the material 110 passes. In some embodiments, the first scanner head 88 may represent an upper scanner head and the second scanner head 86 may represent a lower scanner head. In some embodiments, the one or more scanner heads 98 may be supported by two transverse beams (e.g., first transverse beam 92 and second transverse beam 94) on which are mounted the first scanner head 88 and the second scanner head 86.

The operative faces of the one or more scanner heads 98 may define the measurement gap that accommodates the material 110 to be measured. In some embodiments, the dual frequency comb measurement system 100 (or portion thereof) may be incorporated into the first scanner head 88. The first scanner head 88 may be configured to move repeatedly back and forth the cross direction across the width of the material 110 which moves in the machine direction, so that the thickness of the entire material (or substantially the entire material) may be measured. In some embodiments, one or more components of the dual frequency comb measurement system 100 (e.g., dual frequency comb source such as dual frequency comb spectrometer or other component) may be housed within the first scanner head 88. Alternatively, or additionally, in some embodiments, one or more components of the dual frequency comb measurement system 100 (e.g., dual frequency comb source such as dual frequency comb spectrometer or other component) may be housed within the second scanner head 86. In some embodiments, one or more components of the dual frequency comb measurement system 100 may be positioned in the first scanner head 88 and one or more other components of the dual frequency comb measurement system 100 may be positioned in the second scanner head 86. The movement of the first scanner head 88 and the second scanner head 86 may be synchronized with respect to speed and direction so that they are aligned with each other.

The dual frequency comb measurement system 100 may implement dual frequency comb spectroscopy (DFCS) technique to provide a method for measuring thickness and/or other properties of the material 110. The dual frequency comb measurement system 100 may leverage two optical frequency combs with slightly different repetition rates to generate spectroscopic information about the material 110. The thickness measurement, using the DFCS approach, may be based on interference fringes present in a RF signal, as further described herein, which result from optical interference effects within the material. Alternatively, or additionally, the thickness measurement, using the DFCS approach, may be based on absorption features in the RF signal that correspond to specific material absorption characteristics. In some embodiments, the dual frequency comb measurement system 100 may be configured to analyze both types of spectroscopic information to provide comprehensive material characterization including thickness, composition, and/or other material properties.

The DFCS technique may facilitate and/or enable accurate thickness measurements of various types of materials including plastic films, paper, and other web-based products. The DFCS approach may provide several advantages over conventional measurement techniques. The DFCS approach may provide broad spectral coverage spanning hundreds of nanometers or greater, enabling simultaneous measurement of multiple material properties. High measurement speeds may be achieved, with measurement times of less than one millisecond possible. The DFCS approach may utilize photodetection rather than complex imaging optics, reducing system cost and complexity. Additionally, the DFCS approach may provide high spectral resolution and sensitivity to material absorption characteristics in both near-infrared and infrared wavelength ranges.

In some embodiments, the dual frequency comb measurement system 100 may operate by generating a first optical frequency comb having a first repetition rate and a second optical frequency comb having a second repetition rate that differs from the first repetition rate. Each optical frequency comb may comprise a series of discrete, regularly spaced optical frequencies that span a broad wavelength range. For example, in some embodiments, each optical frequency comb may comprise a beam formed of a number of synchronized discrete and narrow wavelengths. For example, each optical frequency comb may comprise a directed propagation of electromagnetic radiation (e.g., light) that maintains spatial coherence and defined propagation characteristics as it travels from a source (e.g., dual frequency comb source) to a target or through an optical path.

The difference between the first repetition rate and the second repetition rate may be in the radio frequency range, such as kilohertz frequencies, which enables the generation of detectable electronic signals. When light from one or both optical frequency combs interacts with the material 110, the transmitted or reflected light carries information about the material properties. A diode photodetector may detect the optical signals from both frequency combs after interaction with the web material and generate a RF signal. The RF signal contains spectroscopic information that can be analyzed to determine the thickness of the web material.

The generation of the dual optical frequency combs may be accomplished through various techniques that produce two synchronized frequency combs with different repetition rates. In some embodiments, a first optical frequency comb having a first repetition rate may be generated using mode-locked laser systems (or other laser system), such as fiber-based laser configurations or photonic chip implementations. A second optical frequency comb having a second repetition rate different from the first repetition rate may be generated using similar techniques, with the second repetition rate being offset from the first repetition rate by a controlled amount.

The timing characteristics of the dual frequency comb measurement system 100 may be configured to provide rapid spectroscopic measurements. In some embodiments, the dual frequency comb measurement system 100 may operate with pulses (e.g., short-duration bursts of electromagnetic radiation/light) emitted approximately every 7 nanoseconds, with each pulse comprising a frequency comb with discrete optical frequencies. In some embodiments, the pulse timing may correspond to repetition rates in the range of approximately 100 MHz for fiber-based frequency comb sources. The repetition rate difference between the two optical frequency combs may be approximately in the kilohertz range, creating a measurable offset between the two optical frequency combs. For example, the kilohertz range repetition rate difference may enable the dual frequency comb measurement system 100 to sweep through the various wavelengths (e.g., substantially all wavelengths) in approximately 3 milliseconds. The rapid wavelength sweeping may occur or otherwise enabled based on the slight difference in repetition rates causing the pulses from the two optical frequency combs to progressively walk through different relative timing positions. As the pulses from the two optical frequency combs overlap and separate in time, the optical mixing process samples different portions of the spectral content, effectively creating a time-domain representation of the optical spectrum that may be detected as a RF signal.

The spectral characteristics of the optical frequency combs may be configured to optimize measurement performance. In some examples, the dual frequency comb measurement system 100 may be configured to provide relatively wide spacing between spectral lines to trade off spectral resolution for improved averaging and response time. Wider spectral line spacing may reduce the total number of spectral elements that need to be processed, allowing for faster signal processing and improved signal-to-noise ratio through increased averaging. This configuration flexibility may allow the dual frequency comb measurement system 100 to be optimized for different measurement requirements, balancing spectral resolution against measurement speed and sensitivity.

In some embodiments, a first optical frequency comb and a second optical frequency comb with different repetition rates may be provided in a wavelength range of 1 to 9 microns to enable measurement of various material properties. In some embodiments, the wavelength range of 1-2 microns may be generated using fiber-based frequency comb sources, while extended wavelength ranges of 2-9 microns may be achieved through nonlinear wavelength conversion techniques. The broad wavelength coverage enables the dual frequency comb measurement system 100 to access different absorption features of the material 110, providing comprehensive spectroscopic information for thickness and composition analysis. In some embodiments, a first optical frequency comb and a second optical frequency comb with different repetition rates may be provided in a wavelength range of 2-4 microns. In some embodiments, a first optical frequency comb and a second optical frequency comb with different repetition rates may be provided in a wavelength range of 3-6 microns. In some embodiments, a first optical frequency comb and a second optical frequency comb with different repetition rates may be provided in a wavelength range of 4.5-9 microns.

In some embodiments, the dual frequency comb measurement system 100 comprises a dual frequency comb source 104 configured to generate the dual frequency combs (e.g., two optical frequency combs including a first optical frequency comb and second optical frequency comb). The dual frequency comb source 104 may be embodied by or as a dual frequency comb spectrometer configured to generate a first optical frequency comb having a first repetition rate and a second optical frequency comb having a second repetition rate different from the first repetition rate. For example, a dual frequency comb spectrometer may comprise the dual frequency comb source 104. The dual frequency comb spectrometer or dual frequency comb source 104 thereof may utilize different technological approaches to achieve the generation of synchronized pair of optical frequency combs with controlled repetition rate differences.

In some embodiments, the dual frequency comb spectrometer or dual frequency comb source 104 comprises two pulsed lasers that generate the pair of optical frequency combs with controlled repetition rate differences. In some embodiments, the pair of optical frequency combs may be characterized by a large set of regularly spaced frequencies in its spectral content and short pulses in the time domain. The comb tooth frequencies of the optical frequency combs may be separated by the inverse of the laser cavity round trip time (fᵣₑₚ). By way of example, longer cavities in fiber-based systems may provide spacings at the 100 MHz level. Smaller combs may generate higher frequency spacings in the tens to hundreds of GHz. Lower fᵣₑₚ and may provide a denser spectrum and higher spectral resolution.

As noted above, the pair of optical frequency combs may have different repetition rates. In some example, the repetition rate difference (Dfrep) may be in the radio frequency (RF) range such as kHz and may lead to a beatnote comb of RF frequencies when combined at a photodiode. When light from one or both combs propagate through the material 110, the resulting electronic signal may show an RF spectrum that reveals (e.g., through signal processing) data/information that may be leveraged to determine thickness of the material 110. For example, one or more of the pair of optical frequency combs with different pulse repetition rates may be directed towards the material 110 and propagate a distance through the material 110. Photodetection of the propagated light and data processing/signal processing may be performed to convert the optical absorption to a RF signal that can be leveraged to determine the thickness of the material 110. By way of non-limiting example, the repetition rate may be about 80MHz and the time between pulses may be between about 12.5ns.

In this regard, in some embodiments, the dual frequency comb source 104 is configured to emit pulses at intervals, each comprising of a frequency comb. For example, in some example implementations, the dual frequency comb source 104 (e.g., two pulsed lasers thereof) may be configured to emit pulses at about 7ns intervals (or other intervals), with each pulse comprising a frequency comb, wherein the generated pulses sweep through the complete wavelengths in about 3 microseconds (µs) based at least in part on the repetition rate difference.

The optical frequency comb structure may be characterized by its spectral properties, wherein each individual frequency component (e.g., tooth, comb tooth, or similar terms) of the optical frequency comb is precisely defined and stable. In some embodiments, the frequency spacing between adjacent comb teeth corresponds to the repetition rate of the pulsed laser source, which may be expressed as *fᵣₑₚ =* 1/*Tᵣₑₚ,* where *Tᵣₑₚ* represents the time interval between successive pulses. For the example implementation described above with 7ns intervals, this corresponds to a repetition rate of approximately 143 MHz. In some embodiments, the optical frequency of each comb tooth may be expressed as *fₙ = n* · *fᵣₑₚ + f_{CEO},* where n is an integer representing the tooth number and *f_{CEO}* represents the carrier-envelope offset frequency.

In some embodiments, the dual frequency comb configuration utilizes two frequency combs with slightly different repetition rates, such as *f*_{*rep*1} and *f*_{*rep*2}*,* where the difference *Δfᵣₑₚ = f*_{*rep*2} *- f*_{*rep*1}, for example, may be in the range of Hz to kHz. The repetition rate difference enables the temporal mapping of the optical spectrum to a radio frequency domain through heterodyne detection process or other technique. In some embodiments, the time required for the two pulse trains to sweep through all relative temporal positions (e.g., corresponding to complete wavelength coverage) may be calculated as *T_{sweep} =* 1/*Δfᵣₑₚ.* For the example 3 microsecond sweep time mentioned above, this would correspond to a repetition rate difference of approximately 333 kHz.

In some embodiments, the coherence properties of an optical frequency comb are maintained throughout the measurement process, enabling precise phase relationships between the different spectral components. The coherence length of each comb tooth may be determined by the linewidth of the individual frequency components, which may depend on the stability and noise characteristics of the laser source (e.g., optical frequency comb source). In some embodiments, the coherence length may be sufficient to maintain phase coherence over the optical path lengths encountered in material thickness measurement applications, thereby enabling interferometric measurements based on the phase relationships between different spectral components.

In some embodiments, the bandwidth of an optical frequency comb may span multiple octaves, providing broad spectral coverage for simultaneous measurement of multiple material properties. In some examples, the spectral bandwidth may depend on the gain bandwidth of the laser medium, the dispersion characteristics of the optical cavity, and/or nonlinear optical processes that contribute to spectral broadening. In some embodiments, the optical frequency comb may be spectrally shaped or filtered to optimize the measurement for specific material absorption features or to avoid spectral regions with strong atmospheric absorption that could interfere with the measurement.

As described above, in some embodiments, the dual frequency comb spectrometer (or dual frequency comb source 104 thereof) may be implemented using different technological approaches. In some embodiments, the dual frequency comb source 104 comprises a fiber-based dual frequency comb source (fiber-based source). In this regard, in some embodiments, the first optical frequency comb and the second optical frequency comb may be generated using a fiber-based source. Fiber-based frequency comb sources may utilize mode-locked fiber laser architectures that provide stable and reliable frequency comb generation. In some examples, the fiber-based source may comprise erbium-doped fiber laser systems that generate octave-spanning frequency combs in the near-infrared wavelength range. Fiber-based implementations may offer advantages in terms of stability, robustness, reliability for harsh manufacturing environments, and established manufacturing processes. A fiber-based configuration may provide stable operation and mature technology platforms suitable for industrial applications. In some examples, the fiber-based source may operate with repetition rates in the range of approximately 100 MHz, corresponding to the round-trip time of the laser cavity of the fiber-based laser. Fiber-based frequency comb sources may provide dense spectral content with closely spaced frequency lines, enabling high spectral resolution measurements.

In some embodiments, the dual frequency comb spectrometer may comprise a photonic chip. In some embodiments, the dual frequency comb source 104 may embodied as a photonic chip-based dual frequency comb source. Photonic chip implementations may offer advantages in terms of size, weight, power consumption, and manufacturing cost compared to some other sources. The photonic chip may integrate optical components on a single substrate, enabling compact and portable optical frequency comb generation systems or configuration. In some embodiments, the photonic chip may comprise silicon nitride waveguides. For example, in some implementations, the photonic chip may utilize silicon nitride (SiN) waveguide resonators to generate dual optical frequency combs. Silicon nitride waveguide technology may provide a manufacturable platform for generating broad optical frequency combs through nonlinear optical processes. The silicon nitride platform may offer compatibility with complementary metal-oxide semiconductor (CMOS) manufacturing processes, enabling potential for large-scale production and cost reduction. The silicon nitride material may offer favorable dispersion properties and nonlinear characteristics that enable efficient optical frequency comb generation, for example, when combined with high-quality factor resonator structures. In some embodiments, the photonic chip may comprise high-Q resonators that enable low-threshold, broadband comb generation.

In some examples, the photonic chip comprising silicon nitride waveguides may generate frequency combs through four-wave mixing processes in micro-resonator structures. The silicon nitride waveguides may be configured as ring resonators or other cavity geometries that support multiple optical modes. When optical power is coupled into the resonator structures, the nonlinearity of the silicon nitride material may work in combination with the dispersion properties to generate light across a broad range of cavity modes, creating the optical frequency comb structure. Photonic chip implementations may provide higher repetition rates compared to some other sources. The higher repetition rates may enable faster measurement speeds. The chip-scale approach may offer the potential for low-cost, high-volume manufacturing using semiconductor fabrication processes compatible with CMOS technology.

The dual frequency comb measurement system 100 may be configured to operate across multiple wavelength ranges to access different material absorption characteristics and optimize measurement performance for various materials. The wavelength range selection may depend on the specific material properties of the material 110 being measured and the absorption features of interest for thickness determination. For example, the dual frequency comb spectrometer (or dual frequency comb source 104 thereof) may be configured to operate across different spectral regions depending on the specific measurement requirements.

In some embodiments, the first optical frequency comb and the second optical frequency comb may operate in a wavelength range of 1-2 microns. The 1-2 micron wavelength range may correspond to the near-infrared spectral region. In this regard, for measurements in the near-infrared region, the dual frequency comb source 104 may be configured to generate optical frequency combs in the wavelength range of approximately 1-2 microns. The 1-2 micron wavelength range may provide access to overtone and combination absorption bands of various molecular species present in the material 110. The 1-2 micron wavelength range may be particularly suitable for measuring organic polymer films and other materials that exhibit absorption features in the near-infrared region.

In some embodiments, the first optical frequency comb and the second optical frequency comb may operate in a wavelength range of 2-9 microns. The 2-9 micron wavelength range may encompass the mid-infrared spectral region where many materials exhibit strong fundamental absorption bands. The 2-9 microns wavelength range may provide access to characteristic molecular fingerprint regions that enable precise material identification and composition analysis in addition to thickness measurement. The wavelength range of 2-9 microns may be achieved using nonlinear wavelength conversion techniques applied to a base frequency comb system operating in the 1-2 micron range. For example, the 1-2 micron wavelength range may be extended to approximately 2-9 microns through nonlinear wavelength conversion techniques. Such wavelength extension may provide enhanced sensitivity for thickness measurements based on absorption spectroscopy.

Nonlinear wavelength conversion may utilize optical processes such as difference frequency generation, optical parametric amplification, or other nonlinear optical phenomena to extend the spectral coverage of the optical frequency combs. The nonlinear wavelength conversion process may take the output from a 1-2 micron frequency comb source and generate corresponding frequency comb structures at longer wavelengths in the 2-9 micron range. This approach may enable the dual frequency comb measurement system 100 to access the mid-infrared spectral region while leveraging near-infrared frequency comb technologies as the foundation. The nonlinear wavelength conversion approach may utilize nonlinear optical crystals or waveguide structures that facilitate efficient frequency conversion processes. The conversion efficiency and spectral characteristics may be optimized through careful selection of nonlinear materials, phase-matching conditions, and optical power levels. The nonlinear wavelength conversion may preserve the optical frequency comb structure and timing characteristics of the original 1-2 micron source while translating the spectral content to longer wavelengths.

In this regard, in some embodiments, a dual frequency comb spectrometer or dual frequency comb source 104 may be configured to emit light beams (e.g., dual optical frequency combs) in a region of interest. In some embodiments, the region of interest is 1-9 microns. In some embodiments, a frequency comb in the range of 1-2 microns is generated with a base frequency comb system, and nonlinear wavelength conversion (as discussed above) applied to extend the wavelength range from 1-2 microns to 1-9 microns In some embodiments, the selection of the spectral region of interest may be determined based on the specific material properties and measurement requirements of the application. For example, for near-infrared, the 1-2 micron range may provide sufficient spectral coverage for various polymer and plastic sheet materials.

In some embodiments, the dual frequency comb spectrometer or dual frequency comb source 104 may be configured to provide wavelength tunability within the specified spectral regions. Such tunability may enable optimization of the thickness measurement for specific material types or thickness ranges. The wavelength selection may be controlled electronically or through optical filtering techniques to target specific absorption lines or spectral regions that provide optimal signal-to-noise ratio for the thickness measurement.

The repetition rate difference between the two frequency combs may be precisely controlled to optimize the measurement speed and/or spectral resolution. By way of example, the repetition rate difference may be adjustable within a range of approximately 1 Hz to 10 kHz, depending on the specific measurement requirements. A smaller repetition rate difference may provide higher spectral resolution but may require longer measurement times, while a larger difference may enable faster measurements with correspondingly lower spectral resolution. The optimal repetition rate difference may be selected based on factors such as the material thickness range, the desired measurement precision, and/or the manufacturing line speed. The dual frequency comb spectrometer (or dual frequency comb source 104) may be configured with specific repetition rate parameters optimized for the intended measurement application. By way of non-limiting example, in some implementations, the first optical frequency comb may have a repetition rate of approximately 80 MHz, while the second optical frequency comb may have a repetition rate of approximately 80.005 MHz, wherein the difference in repetition rates may enable the generation of RF signal (e.g., comprising RF beatnotes) that are detected using one or more electronic detection techniques such as photodetection and processed using one or more signal processing techniques.

In some embodiments, the light beams (e.g., dual optical frequency combs) emitted by the dual frequency comb spectrometer or dual frequency comb source 104 may be expanded, collimated, and/or combined to cover a region of interest. In some embodiments, the light beams are expanded, collimated, and/or combined using one or more optical components 106 of the system 100. In some embodiments, the one or more optical components 106 comprise one or more lens.

As shown in FIG. 1B, the dual frequency comb source 104 may comprise a first source 104a (e.g., first optical frequency comb source) and a second source 104b (e.g., second optical frequency comb source) configured to emit dual optical frequency combs. For example, the first source 104a may be configured to emit a first optical frequency comb 105a and the second source 104b may be configured to emit a second optical frequency comb 105b. In the depicted example of FIG. 1B, the dual frequency comb source 104 may comprise two fiber-based frequency comb lasers (e.g., a first fiber-based frequency comb laser and a second fiber-based frequency comb laser ) configured to emit two short-pulse frequency-comb laser beams corresponding to dual optical frequency combs, as described above.

As described above, the dual frequency comb measurement system 100 may include one or more optical components 106. In some embodiments, at least a portion of the one or more optical components 106 may be configured to direct at least one of the first optical frequency comb 105a or the second optical frequency comb 105b toward the material 110 to enable spectroscopic measurement and analysis to determine thickness or other properties of the material 110. The one or more optical components 106 may include one or more beam steering elements, focusing, and/or collection elements that control the propagation path of the optical frequency comb(s) (e.g., frequency comb light(s)) through or around the material. The optical configuration may be designed to optimize the interaction between an optical frequency comb and the material 110 while maintaining the coherence and timing characteristics for dual frequency comb spectroscopy measurements to generate thickness measurement data for the material 110.

In some embodiments, the dual frequency comb measurement system 100 may implement a single-comb interaction framework. In such some embodiments, one of the optical frequency combs passes through the material 110 while the other optical frequency comb does not pass through the material 110. In such some embodiments, the one or more optical components 106 (or portion thereof) may be used to direct the one optical frequency comb from the pair of optical frequency combs toward the material 110 while the second optical frequency comb serves as a reference optical frequency comb that does not interact with the material 110.

In such some embodiments, the optical frequency comb directed to the material 110 to pass through the material 110 may interact with the material 110 in reflection and/or transmission. For example, in such some embodiments, one of the first optical frequency comb 105a or the second optical frequency comb 105b may be directed toward the material 110, causing the optical frequency comb to interact with the material 110 in reflection or transmission while the other optical frequency comb maintains its original spectral characteristics. The single-comb interaction approach may provide spectroscopic information about the material 110 through comparison of the material-interacted optical frequency comb (e.g., resulting optical frequency comb after passing through the material 110) with the reference optical frequency comb during optical mixing process at a diode photodetector 114. In this regard, in some embodiments, optical signal (e.g., light) corresponding to the material-interacted optical frequency comb is collected and mixed (e.g., combined or similar terms) with the other optical frequency comb (e.g., reference optical frequency comb) after the interacting. For example, the reference optical frequency comb may be leveraged to interfere with the material-interacted optical frequency comb after passing through the material 110. In some embodiments, the mixed optical signals after interference may be converted to an RF signal leveraged to determine thickness of the material 110 or otherwise to generate thickness data comprising thickness measurements for the material 110.

In some embodiments, the dual frequency comb measurement system 100 may implement a dual-comb interaction framework. In such some embodiments, both optical frequency combs (e.g., both first optical frequency comb 105a and second optical frequency comb 105b) emitted by the dual frequency comb spectrometer or dual frequency comb source 104 are combined and directed to the material 110, wherein at least a portion of the combined optical frequency combs pass through the material 110. In some examples, a portion of the combined optical frequency combs may be reflected internally with respect to the material 110. In such some embodiments, the one or more optical components 106 (or portion thereof) may be leveraged to direct both the first optical frequency comb and the second optical frequency comb of a pair of optical frequency combs through the material 110. For example, both the first optical frequency comb 105a and the second optical frequency comb 105b may be directed toward the material 110 to pass through the material 110, causing both optical frequency combs to interact with the material 110 in reflection or transmission. Both optical frequency combs may acquire spectroscopic information about the material properties.

In some embodiments, the one or more optical components 106 may be configured to support combining the first optical frequency comb 105a and the second optical frequency comb 105b prior to interaction with the material 110. In some embodiments, the dual frequency comb measurement system 100 or one or more optical components 106 thereof may include one or more beam shaping elements configured to optimize the interaction between an optical frequency comb and the material 110. The beam shaping may be optimized to balance measurement sensitivity against spatial resolution, with tighter focusing providing higher intensity for improved signal-to-noise ratio. In some embodiments, the dual frequency comb measurement system 100 or one or more optical components 106 thereof may include one or more focusing lenses or mirrors configured to control the beam size and intensity distribution at the material surface. In some embodiments, the dual frequency comb measurement system 100 or one or more optical components 106 thereof may include one or more collimating optical elements to maintain parallel beam propagation over the propagation distance between the dual frequency comb source 104 and the material 110, and subsequently to a diode photodetector 114.

In some embodiments, the dual frequency comb measurement system 100 or the one or more optical components 106 may include beam expanders configured to increase the diameter of an optical frequency comb beam to, for example, provide adequate coverage of the material 110 being measured. In some embodiments, the beam expansion may ensure that the measurement area encompasses a representative portion of the material 110, thereby providing statistically meaningful thickness measurements across the width or area of interest. In some embodiments, the beam expansion ratio may be selected based on the specific dimensions of the material being measured and the desired spatial resolution of the thickness measurement.

In some embodiments, the dual frequency comb measurement system 100 may include one or more collection optical elements configured to efficiently gather transmitted light through the material 110 and direct the light toward the diode photodetector 114. The collection efficiency may be optimized through appropriate selection of numerical aperture, focal length, and/or positioning of the one or more collection optical elements relative to the material 110 and diode photodetector 114. In some embodiments, the one or more collection optical elements comprise one or more lens. In some embodiments, the dual frequency comb measurement system 100 may include one or more collection optical elements configured to efficiently gather reflected light from the material 110

The one or more optical components 106 (e.g., a portion thereof) or other components of the dual frequency comb measurement system 100 may be configured to support transmission-based measurement where light from an optical frequency comb propagates through the material 110 from one side of the material 110 to the other side of the material 110 and is collected after passing through the material 110. The transmission-based measurement approach may provide information about thickness of the material 110 through absorption analysis of how the material 110 modifies the transmitted light spectrum. Transmission-based measurements may be particularly suitable for measuring thickness of materials that are sufficiently transparent at the operating wavelengths to allow adequate light transmission for detection.

Alternatively, or additionally, the one or more optical components 106 (e.g., a portion thereof) or other components of the dual frequency comb measurement system 100 may be configured to support reflection-based measurement where light from an optical frequency comb reflects from the material 110 during interaction with the material 110. The reflection-based measurement may provide information about thickness of the material 110 through analysis of interference effects between light reflected from different interfaces within the material structure.

In some embodiments, the optical frequency comb(s) may pass through the material 110 one or more times. In some embodiments, multiple passes of the optical frequency combs through the material 110 may be achieved using retroreflectors, mirrors, or other optical elements positioned to redirect the light back through the material 110. Such multi-pass configurations may increase the effective path length and may enhance the measurement sensitivity for materials with weak absorption features. The multi-pass approach may be particularly suitable for measuring very thin materials or for detecting small variations in material thickness.

As shown in FIG. 1B, the dual frequency comb measurement system 100 may comprise a diode photodetector 114 (e.g., photodiode, RF diode, or the like). The diode photodetector 114 may be configured to detect the optical signals and convert them to electrical signals. The diode photodetector 114 may be configured for measuring or otherwise determining RF signals at various frequencies. For example, after interaction by one or both optical frequency combs of the dual frequency combs emitted by the dual frequency comb source 104 with the material 110 (as described above), an RF signal corresponding to the optical frequency comb(s) may be detected, extracted, mapped or otherwise generated using the diode photodetector 114. For example, the RF signal may correspond to light from combined optical frequency comb that pass through the material 110 or light from an optical frequency comb that pass through the material 110 and mixed with the other optical frequency comb in the pair of optical frequency combs.

The diode photodetector 114 may serve as an optical-to-electrical conversion element that supports dual frequency comb spectroscopy measurement by converting the optical frequency differences between two optical frequency combs into electronically detectable RF signals. For example, the diode photodetector 114 may be configured to detect or otherwise receive optical signals corresponding to the optical frequency combs and generate an electrical output signal (e.g., RF signal) that comprises spectroscopic information about the material 110 based on the optical frequency differences between the two optical signals.

In some embodiments, the diode photodetector 114 may be configured to detect optical signals corresponding to the first optical frequency comb 105a and the second optical frequency comb 105b after optical mixing and the interacting of one or both of the first optical frequency comb 105a and the second optical frequency comb 105b with the material 110 and generate the RF signal based on the optical frequency differences between the detected optical signals. The optical mixing may occur prior to interacting of any of the optical frequency combs with the material 110 or after the interacting of one or both of the first optical frequency combs with the material 110 depending on the comb interaction framework (e.g., single-comb interaction or dual-comb interaction). In this regard, the diode photodetector 114 may be leveraged to map the optical frequency combs after the interacting (by one optical frequency comb in some embodiments or by both optical frequency combs in some embodiments) with the material 110 to an RF spectrum.

In some embodiments, the dual frequency comb measurement system 100 may be configured to perform optical mixing of a material-interacted optical frequency comb and a reference optical frequency comb at the diode photodetector 114 or otherwise after interaction of an optical frequency comb with the material 110. In such some embodiments, the mixing process may occur when material-interacted optical frequency comb and the reference optical frequency illuminate the diode photodetector 114 (e.g., photodiode or the like), causing the diode photodetector 114 to generate an electrical signal proportional to the optical power incident on the diode photodetector 114. Based on the first optical frequency comb 105a and the second optical frequency comb 105b having different repetition rates, the optical mixing at the diode photodetector may create beat frequencies that correspond to the differences between corresponding optical frequencies in the two optical frequency combs. The diode photodetector 114 may convert the optical beat frequencies into electrical signals in the RF range for processing using electronic signal processing techniques or other techniques.

In some embodiments, the dual frequency comb measurement system 100 may be configured to perform optical mixing of the first optical frequency comb 105a and the second optical frequency comb 105b to generate a combined optical frequency comb 108 prior to interacting with the material 110. In some embodiments, the optical mixing may be performed such that the combined optical frequency comb 108 maintains temporal coherence between the pair optical frequency combs throughout the optical path to maintain interference properties.

In some embodiments, the one or more optical components 106 may comprise one or more beam combining elements configured to spatially and temporally combine the first optical frequency comb 105a and the second optical frequency comb 105b prior to the interacting to generate the combined optical frequency comb 108. For example, the one or more optical components 106 may comprise beam splitter(s), dichroic mirror(s), polarizing beam splitter(s), and/or fiber coupler(s) configured for mixing of the first optical frequency comb 105a and the second optical frequency comb 105b to generate the combined optical frequency comb 108.

Based on the first optical frequency comb 105a and the second optical frequency comb 105b having different repetition rates, the diode photodetector 114 may create beat frequencies that correspond to the differences between corresponding optical frequencies in the two optical frequency combs when the combined optical frequency comb 108 illuminates the diode photodetector 114. The diode photodetector 114 may convert the optical beat frequencies into electrical signals in the RF range for processing using electronic signal processing techniques or other techniques.

In some embodiments, the diode photodetector 114 may measure signals in the MHz radio frequency range. The RF signal generated by the diode photodetector 114 may comprise frequency components that span from kilohertz to megahertz frequencies, depending on the repetition rate difference between the two optical frequency combs and/or the number of optical frequency components being detected. The MHz radio frequency range may provide a convenient frequency range for electronic signal processing. The RF signal may contain multiple frequency components, with each component corresponding to the beat frequency between a pair of optical frequencies from the two optical frequency combs.

The repetition rate difference between the two optical frequency combs may enable rapid spectral acquisition by creating a time-varying interference pattern that sweeps through different optical frequency combinations. As the pulses from the two frequency combs progressively shift in relative timing due to the repetition rate difference, different portions of the optical spectra may be sampled and converted to RF signals. This temporal scanning process may allow the diode photodetector to capture spectroscopic information across the entire optical bandwidth of the frequency combs within a short measurement time, such as a few milliseconds.

The diode photodetector 114 may comprise various types of photodiode technologies suitable for detecting light in the wavelength ranges used by the system 100. In some embodiments, the diode photodetector may comprise an InGaAs photodiode for detection of near-infrared light in the 1-2 micron wavelength range. InGaAs photodiodes may provide high sensitivity and fast response times suitable for detecting the rapid temporal variations in the optical signals from the dual frequency combs. The InGaAs material may offer favorable absorption characteristics in the near-infrared range and may provide sufficient bandwidth to detect the RF signals generated by the frequency comb mixing process. For applications operating in the mid-infrared wavelength range of 2-9 microns, the diode photodetector 114 may comprise photodiode technologies such as mercury cadmium telluride (MCT) detectors, indium antimonide (InSb) detectors, or other mid-infrared sensitive materials. These detector types may provide the spectral sensitivity needed to detect frequency comb light at longer wavelengths while maintaining sufficient speed and sensitivity for RF signal generation. The choice of diode photodetector technology may depend on the specific wavelength range, required sensitivity, operating temperature, and cost considerations for the particular application.

The diode photodetector 114 may be coupled (e.g., at least communicatively coupled) to signal processing electronics that amplify, filter, and/or digitize the RF signal for subsequent analysis. The signal processing electronics may include radio frequency amplifiers to boost the signal levels, bandpass filters to select specific frequency ranges of interest, and/or analog-to-digital converters to digitize the RF signal for computer-based analysis. The signal processing may include Fourier transform processing to convert the time-domain RF signal into frequency-domain spectroscopic information that reveals the absorption and/or interference characteristics/features of the material.

The diode photodetector configuration may be optimized for the specific measurement geometry. The diode photodetector active area may be sized to efficiently collect the optical signals while maintaining fast response times, and the diode photodetector 114 may be positioned at an appropriate distance from the material to optimize signal collection efficiency. In some embodiments, optical focusing elements may be used to concentrate the optical signals onto the diode photodetector active area to improve signal-to-noise ratio and measurement sensitivity.

The positioning of the diode photodetector 114 relative to the material 110 and the dual frequency comb source 104 may be configured to accommodate different measurement geometries. In some embodiments, the diode photodetector 114 may be positioned on an opposite side of the material 110 from a source (e.g., first source 104a or second source 104b) of the first optical frequency comb and the second optical frequency comb. The opposite-side detector positioning may enable detection of light from the first optical frequency comb 105a or the second optical frequency comb 105b that has passed through the material 110, providing access to material properties and absorption characteristics. The opposite-side detector positioning may be suitable for materials with sufficient transparency and for applications where both sides of the material are accessible for optical components.

In some embodiments, the diode photodetector 114 may be positioned on a same side of the material 110 as a source of the first optical frequency comb 105a and the second optical frequency comb 105b. The same-side detector positioning (e.g., reflection-based detector positioning) may enable detection of light that has reflected from the material surface or from internal interfaces within the material structure. The same-side detector positioning may be suitable for applications where only one side of the material is accessible. In some embodiments, the same-side detector configuration may utilize beam splitting or beam steering optical components to separate the incident frequency comb light from the reflected light, ensuring that the diode photodetector receives the reflected signals without interference from the source light. Optical elements such as beam splitters, mirrors, or directional couplers may be employed to achieve optical isolation and signal routing. The same-side detector configuration may also incorporate focusing optics to concentrate the reflected light onto the diode photodetector and collection optics to gather reflected light from the web material surface.

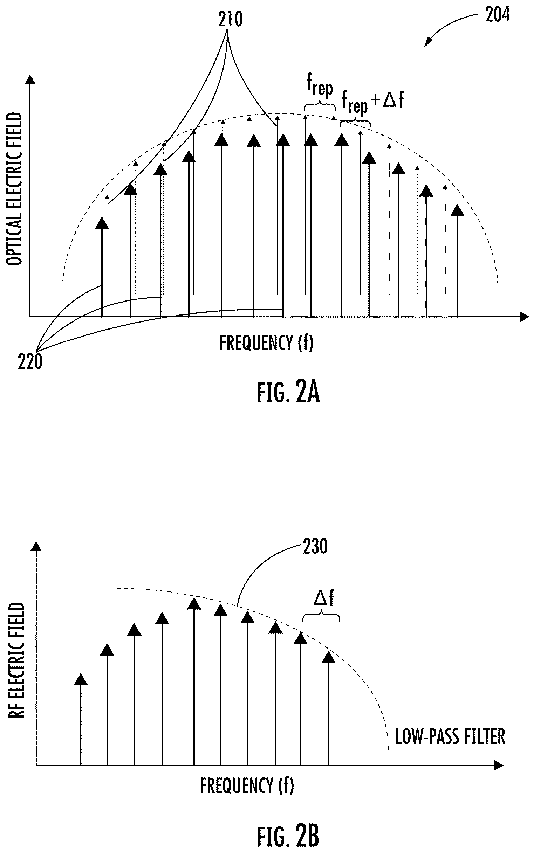

Now referring to FIGS. 2A-B, frequency domains in accordance with at least some example embodiments of the present disclosure are provided. Specifically, FIG. 2A illustrates a collected optical signals 204 (e.g., optical spectrum) corresponding to the first optical frequency comb 105a and second optical frequency comb 105b after interaction of at least one the first optical frequency comb 105a or second optical frequency comb 105b with the material 110 and after optical mixing. As described above, in some embodiments, the optical mixing may occur before the interacting and in some embodiments, the optical mixing may occur after the interacting.

The collected optical signals 204 may comprise a first optical signal 210 and a second optical signal 220. In some embodiments, the first optical signal 210 may correspond to light from an optical frequency comb that passed through the material 110 and the second optical signal 220 may correspond to light from a second optical frequency comb that passed through the material 110, wherein both first and second optical frequency combs are from a pair of frequency combs emitted by the dual frequency comb source 104. In some embodiments, the first optical signal 210 may correspond to light from an optical frequency comb that passed through the material 110 and the second optical signal 220 may correspond to a second optical frequency comb (e.g., reference optical frequency comb) not directed through the material 110, wherein both first and second optical frequency combs are from a pair of frequency combs emitted by the dual frequency comb source 104 and the second optical frequency comb light (e.g., reference optical frequency comb) is configured to interfere with the first optical frequency comb.

With reference to FIG. 2B, the collected optical signals 204 may be converted to an RF signal 230 (e.g., RF spectrum) corresponding to the collected optical signals 204. In some embodiments, the collected optical signals 204 (e.g., first optical signal 210 and the second optical signal 220) are detected by the diode photodetector 114. In some embodiments, the collected optical signals 204 may be collected using one or more optical elements of the system 100. In some embodiments, the one or more optical elements may comprise one or more lens. In some embodiments, the first optical signal 210 and the second optical signal 220 are directed to a diode photodetector 114, and the RF signal 230 is generated by the diode photodetector 114 based on the first optical signal 210 and the second optical signal 220. In this regard, in some embodiments, the collected optical signals 204 may be detected, extracted, and/or received by the diode photodetector 114.

The light from the optical frequency comb directed to the material 110 may travel through the material and maintain some coherence. In some embodiments, the coherence enables the diode photodetector 114 to generate the RF signal 230 as the difference of the optical signals (e.g., difference of the first optical signal 210 and the second optical signal 220. In this regard, in some embodiments, generating the RF signal 230 comprises performing heterodyne detection. In such some embodiments, when light from the dual optical frequency combs is incident on the diode photodetector 114 after the interacting with the material 110 or the diode photodetector 114 receives or detects the collected optical signals 204, the diode photodetector 114 may generate an RF signal 230 that includes beat frequencies corresponding to the differences between the optical frequencies of the first optical signal 210 and second optical signal 220 and corresponding to the pair of optical frequency comb 105a, 105b. Based on the pair of optical frequency combs 105a, 105b having different repetition rates (*f*_{*rep*1} and *f*_{*rep*2})*,* each pair of corresponding optical frequencies from the two optical frequency combs may produce a unique RF beat frequency. In this regard, the resulting RF signal 230 may comprise a comb of frequencies spaced by the repetition rate difference *Δfᵣₑₚ = f*_{*rep*2} - *f*_{*rep*1}.

In some embodiments, the RF signal 230 generated by the diode photodetector 114 is processed using electronic signal processing techniques and/or other techniques to support extraction of spectral information from the RF signal 230. The RF signal processing may include amplification, filtering, and/or analog-to-digital conversion to enable digital signal processing. In some embodiments, the RF signal 230 may be analyzed using Fast Fourier Transform (FFT) techniques and/or other techniques to extract spectral information from the RF signal. In some embodiments, the intensity at each frequency in the RF signal 230 may be determined by applying Fourier transform (FFT) to the detected optical signals (e.g., first optical signal 210 and second optical signal 220). In some embodiments, the intensity at each frequency is approximately proportional to the square of the transmitted intensity.

In some embodiments, the bandwidth of the diode photodetector 114 may be selected to accommodate the RF frequencies. For example, if the repetition rate difference is in the kHz range and the number of comb teeth spans several MHz in the RF domain, the diode photodetector bandwidth may be selected such that it is sufficient to capture the RF spectrum of interest. In some embodiments, the signal-to-noise ratio of the RF signal 230 may be optimized through careful selection of the diode photodetector characteristics such as responsivity, noise equivalent power, and/or bandwidth. The diode photodetector 114 may be operated under conditions that maximize the signal strength while minimizing noise contributions from sources such as thermal noise, shot noise, and amplifier noise. In some embodiments, the diode photodetector 114 may be temperature-stabilized or cooled to reduce thermal noise and improve the overall system sensitivity.

In some embodiments, the interaction of the first optical frequency comb 105a and/or the second optical frequency comb 105b with the material 110 may result in absorption and/or interference effects. In some embodiments, the first optical signal 210 and/or the second optical signal 220 comprise features from interference and/or absorption. As described above, when the first optical frequency comb 105a and/or the second optical frequency comb 105b is directed to the material 110, some amount of light from the optical frequency comb may be internally reflected, while some or most of the frequency comb lights may pass through the material 110. In this regard, the reflected light may be used to measure the thickness of the material 110 as an interference pattern observed when wavelengths are measured and the transmitted light may enable utilizing optical absorption to measure the thickness of the material 110.

Interference pattern may be representative and/or indicative of spatial or temporal distribution of optical intensity variations that result from the superposition of two or more coherent light waves. In some examples, an interference pattern may be generated when frequency comb lights reflect internally from interfaces of the material 110, such as the inner surfaces of a first side and a second side of the material 110. The interference pattern may arise from the optical path difference between light waves that have traveled different distances through the material 110, creating constructive and destructive interference that manifests as periodic variations in the intensity of the detected optical signals. For example, the interference pattern may manifest as periodic variations in the intensity of the RF signal 230 as a function of optical frequency, with the periodicity being inversely related to the optical thickness of the material. The characteristics of the interference pattern, including the spacing between intensity maxima and minima, may be related to the optical thickness of the material, enabling precise determination of material thickness through analysis of the interference pattern in the RF domain.

As described herein, transmitted frequency comb light that passes through the material 110 may carry information about the absorption characteristics of the material. The absorption spectrum corresponding the detected optical signal may reveal absorption features that are characteristic of the material thickness and/or other properties. These absorption features may appear as dips or peaks in the RF spectrum. The strength of these absorption features may be related to the material thickness. In some embodiments, the choice between utilizing the interference-based measurement approach or absorption-based measurement may depend on the specific properties of the material 110. For materials with strong absorption features in the wavelength range of the frequency combs, the absorption-based measurement approach utilizing absorption features may provide higher sensitivity and accuracy. For materials with weak absorption but significant refractive index contrast, the interference-based measurement approach utilizing internally reflected light may be more suitable for thickness determination.

In some embodiments, the system 100 includes a signal processor configured to determine the thickness of the material 110 based on the RF signal 230 generated by the diode photodetector 114. The signal processor may receive the RF signal 230 from the diode photodetector 114 and apply one or more signal processing algorithms to extract thickness information from spectroscopic data (e.g., spectroscopic information within the RF signal 230). In some embodiments, the signal processor may comprise digital signal processing hardware, software algorithms, or combinations thereof that enable real-time or near-real-time analysis of the RF signal 230 to provide thickness measurements of the material 110. The RF signal analysis process may comprise analyzing the RF signal 230 to determine thickness and/or composition of the material 110. The RF signal analysis process may involve converting the time-domain RF signal 230 into spectroscopic information that reveals material properties through various computational techniques. The signal processor may implement one or more RF signal analysis approaches to extract different types of information from the RF signal 230, enabling comprehensive characterization of the web material beyond simple thickness measurement.

In some embodiments, analyzing the RF signal 230 may comprise performing a Fourier transform of the RF signal 230 to extract spectral information. The Fourier transform process may convert the time-domain RF signal 230 into frequency-domain spectral data that reveals the optical absorption and/or interference characteristics/features of the material 110. The Fourier transform may decompose the RF signal 230 into its constituent frequency components, with each frequency component corresponding to a specific optical wavelength or frequency difference between the two optical frequency combs. The spectral information extracted through the Fourier transform may provide detailed information about how the material interacts with light across the optical bandwidth.

In some embodiments, the signal processor may be configured to determine the thickness of the material 110 based on interference fringes in the RF signal. For example, in some embodiments, the method of determining the thickness of the material 110 may be based at least in part on interference fringes in the RF signal that result from optical interference effects within the material structure. As described above, when light from the optical frequency combs passes through or reflects from the material 110, interference may occur between light rays that travel different optical path lengths through the material 110. These interference effects may create periodic variations in the transmitted or reflected light intensity as a function of optical frequency, which may appear as interference fringes in the spectral information extracted from the RF signal.

The spectral information may include interference fringes used to determine the thickness of the sheet material. The interference fringes may exhibit a periodic pattern in the frequency domain, with the period of the fringes being related to the optical thickness of the web material. The signal processor may analyze the fringe spacing and pattern to calculate the physical thickness of the material based on the known refractive index of the material and the wavelength-dependent characteristics of the interference pattern. The interference fringe analysis may provide high-precision thickness measurements, particularly for thin materials where the optical path length differences create well-defined fringe patterns.

In some embodiments, the signal processor may be configured to determine the thickness of the web material based on absorption features in the RF signal. The method of determining the thickness of the web material may be based on absorption features in the RF signal that correspond to wavelength-specific absorption characteristics of the web material. Different materials may exhibit characteristic absorption bands at specific optical wavelengths, and the strength of these absorption features may be related to the amount of material present along the optical path length. The processor may analyze the depth and shape of absorption features in the spectral information to determine the thickness of the web material based on Beer's law or other absorption-based relationships.

In some embodiments, the absorption-based thickness determination may utilize calibration data that relates absorption strength to material thickness for the specific web material being measured. The processor may compare the measured absorption features against reference spectra or calibration curves to determine the thickness that would produce the observed absorption characteristics. This approach may be particularly suitable for materials with strong, well-defined absorption features in the wavelength range of the dual frequency comb system.

In some embodiments, the system 100 (or signal processor thereof) may implement an algorithm to automatically determine whether to use interference or absorption analysis for thickness determination. In some embodiments, the algorithm may evaluate characteristics of the RF signal 230 to determine which analysis method may provide more accurate or reliable thickness measurements for the particular web material and measurement conditions. The automatic selection algorithm may analyze signal quality metrics, signal-to-noise ratios, fringe visibility, absorption feature strength, and other parameters to determine the optimal analysis approach. The algorithm may assess the quality and characteristics of interference fringes present in the spectral information to determine whether interference-based analysis may be suitable. The algorithm may evaluate fringe contrast, fringe spacing regularity, and signal-to-noise ratio of the fringe pattern to determine whether the interference fringes provide sufficient quality for accurate thickness determination. If the interference fringes meet predetermined quality criteria, the algorithm may select interference-based analysis as the primary thickness determination method.

In some embodiments, the algorithm may assess the strength and characteristics of absorption features in the spectral information to determine whether absorption-based analysis may be appropriate. The algorithm may evaluate absorption feature depth, spectral width, and signal-to-noise ratio to determine whether the absorption characteristics provide sufficient information for reliable thickness measurement. The algorithm may compare the absorption features against known material absorption characteristics to verify that the observed features correspond to the expected material composition. The automatic selection algorithm may implement decision logic that considers multiple factors simultaneously to select the optimal analysis method. The algorithm may weight different signal quality metrics based on the specific measurement requirements and material characteristics. In some cases, the algorithm may determine that both interference and absorption analysis may provide reliable results, and may combine results from both methods to improve measurement accuracy and provide cross-validation of the thickness determination.

In some embodiments, the signal processor may also implement adaptive signal processing techniques that optimize the analysis parameters based on the characteristics of the RF signal. The adaptive processing may adjust Fourier transform parameters, filtering characteristics, and analysis algorithms to maximize signal quality and measurement accuracy for the specific web material and measurement conditions. The adaptive approach may enable the system to maintain high measurement performance across different material types and varying measurement conditions without manual adjustment of system parameters. The thickness determination process may provide real-time or near-real-time measurement results that enable continuous monitoring of material thickness during manufacturing processes. The processor may implement efficient algorithms that minimize computation time while maintaining measurement accuracy, enabling high-speed thickness monitoring for moving web materials. The real-time capability may enable immediate feedback for process control applications where thickness variations need to be detected and corrected rapidly to maintain product quality.

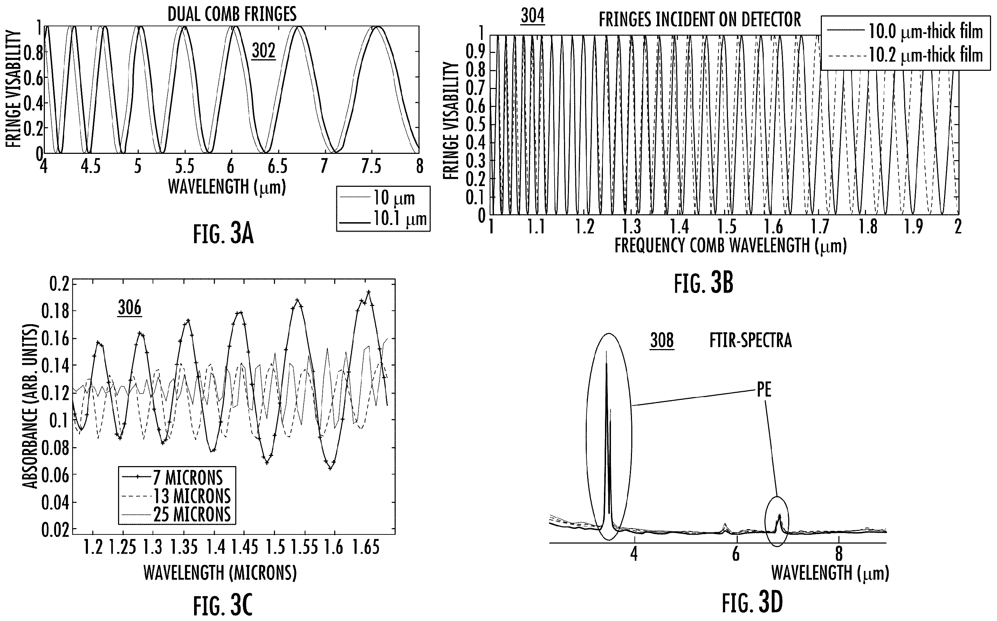

FIGS. 3A-B illustrate interference fringes in accordance with at least some example embodiments of the present disclosure. Specifically, FIG. 3A illustrates a graphical representation of a first interference fringe pattern 302 (e.g., dual comb fringes) and FIG. 3B illustrates a graphical representation of a second interference fringe pattern 304. FIG. 3C illustrates a graphical representation of an absorption spectrum 306 showing interference fringes. It should be noted that FIGS. 3A-B show a simplified calculation/representation of the interference fringes (for illustration purposes) relative to the measured interferences fringes depicted in FIG. 3C. As seen in FIGS. 3A-C, the interference fringe patterns may change as the thickness of the material changes. FIG. 3D illustrates an actual absorption spectra 308 and features that may be used to calculate or otherwise determine absorption and therefore thickness, as described herein. Specifically, FIG. 3D illustrates a Fourier transform infrared spectroscopy (FTIR) absorption spectra.

In some embodiments, the interference fringe patterns may be characterized by their periodicity, amplitude, and phase relationships, which collectively provide quantitative information about the material thickness. The spacing between adjacent interference maxima and minima in the fringe patterns may be inversely proportional to the optical thickness of the material, where optical thickness is defined as the product of the physical thickness and the refractive index of the material. As the material thickness increases, the optical path difference between light rays that have traveled different paths through the material also increases, resulting in a corresponding change in the interference fringe spacing observed in the radio frequency spectrum. The amplitude variations in the interference fringe patterns may provide additional information about the material properties, including surface quality, internal structure, and optical losses within the material. Materials with smooth, parallel surfaces may produce high-contrast interference fringes with well-defined maxima and minima, while materials with rough surfaces or internal scattering may exhibit reduced fringe visibility. The phase relationships between different spectral components of the interference pattern may enable determination of absolute thickness values rather than relative thickness changes, providing enhanced measurement capabilities for process control applications.

In some embodiments, the dual frequency comb measurement system 100 may be configured to detect and measure multiple thin layers within the material structure. Multi-layer materials may comprise different material compositions in each layer, with each layer contributing distinct spectroscopic signatures that may be identified through analysis of a corresponding RF signal. The broad spectral coverage of the dual frequency comb measurement system 100 may enable simultaneous measurement of different layers by accessing wavelength ranges where each layer exhibits characteristic absorption or interference features, as described herein. The detection of multiple thin layers may utilize wavelength-dependent penetration characteristics of frequency comb light to probe different depths within the material structure. Shorter wavelengths may interact primarily with surface layers, while longer wavelengths may penetrate deeper into the material structure and interact with underlying layers. The system 100 may analyze the wavelength-dependent spectroscopic information to separate the contributions from different layers and determine individual layer thicknesses and/or compositions. The multi-layer measurement may provide valuable information for quality control of laminated materials, coated substrates, and other multi-component web products.

In some embodiments, the dual frequency comb measurement system 100 may include calibration capabilities that ensure accurate and traceable measurements across different operating conditions and material types. The calibration capabilities may comprise reference measurement procedures, standard material measurements, and/or systematic correction algorithms that account for instrumental variations and environmental effects. The calibration process may establish the relationship between the RF signal characteristics and the actual material properties being measured. The calibration capabilities may utilize reference materials with known thickness and composition properties to establish measurement accuracy and traceability. The reference materials may span the range of thicknesses and material types expected in the intended application, providing calibration points across the full measurement range. The calibration process may involve measuring the reference materials under the same conditions as the production measurements and establishing correction factors or calibration curves that relate the measured RF signal characteristics to the known material properties.

The calibration system may implement automatic calibration procedures that periodically verify measurement accuracy without interrupting the production process. The automatic calibration may utilize built-in reference standards, movable calibration targets, or other mechanisms that enable regular calibration checks. The calibration verification may detect drift in system performance due to component aging, environmental changes, or other factors that could affect measurement accuracy over time. The calibration capabilities may include temperature compensation algorithms that account for thermal effects on both the measurement system and the web material properties. Temperature variations may affect the optical properties of the frequency comb sources, the refractive index of the web material, and the response characteristics of the diode photodetector. The temperature compensation may utilize temperature sensors and correction algorithms to maintain measurement accuracy across the expected operating temperature range.

In some embodiments, the dual frequency comb measurement system 100 may be configured to measure moisture content in addition to thickness measurements, providing comprehensive material characterization capabilities. Moisture content measurement may utilize specific absorption features of water molecules that appear in the spectroscopic information extracted from the RF signal. Water molecules may exhibit characteristic absorption bands in both the near-infrared and mid-infrared wavelength ranges that may be accessed by the dual frequency comb system. The moisture measurement capability may analyze absorption features at wavelengths where water exhibits strong absorption characteristics while the base web material exhibits minimal absorption. The dual frequency comb measurement system 100 may compare the strength of water absorption features against calibration data to determine the moisture content of the web material. The moisture measurement may be performed simultaneously with thickness measurement, providing both parameters from a single measurement system.

The moisture content measurement may provide process control information for web manufacturing applications where moisture levels affect product quality, dimensional stability, or processing characteristics. Excessive moisture content may cause dimensional changes, affect material strength, or create processing difficulties in downstream operations. The real-time moisture monitoring capability may enable immediate process adjustments to maintain optimal moisture levels throughout the manufacturing process. The combined thickness and moisture measurement capabilities may enable detection of correlations between these parameters that provide additional insights into material quality and processing conditions. Moisture-induced thickness variations may be distinguished from other sources of thickness variation, enabling more precise process control and quality assessment. The simultaneous measurement of multiple parameters may reduce the need for separate measurement systems and provide more comprehensive material characterization with a single instrument.

### Example Apparatuses of the Disclosure

Having discussed example systems in accordance with some embodiments of the present disclosure, example apparatuses in accordance with some embodiments of the present disclosure will now be described.

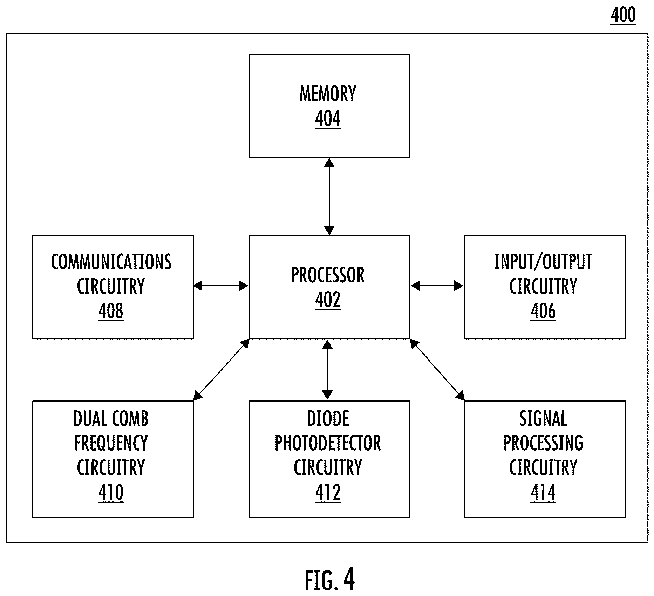

FIG. 4 illustrates a block diagram of an example apparatus in accordance with at least some example embodiments of the present disclosure. Specifically, FIG. 4 depicts an example apparatus 400 ("apparatus 400") specially configured in accordance with at least some example embodiments of the present disclosure. In some embodiments, the dual frequency comb measurement system 100 and/or a portion thereof is embodied by one or more system(s), such as the apparatus 400 as depicted and described in FIG. 4. It should be noted, however, that the components, or elements illustrated in and described with respect to FIG. 4 below may not be mandatory and thus one or more may be omitted in certain embodiments. Additionally, some embodiments may include further or different components or elements beyond those illustrated in and described with respect to FIG. 4. In some embodiments, the functionality of the dual frequency comb measurement system 100 or any subset thereof may be performed by a single apparatus 400 or multiple apparatuses 400. In some embodiments, the apparatus 400 may comprise one or a plurality of physical devices.

The apparatus 400 includes processor 402, memory 404, input/output circuitry 406, communications circuitry 408, dual frequency comb source circuitry 410, diode photodetector circuitry 412, and signal processing circuitry 414. The apparatus 400 may be configured to execute the operations described herein. Although components are described with respect to functional limitations, it should be understood that the particular implementations necessarily include the use of particular computing hardware. It should also be understood that in some embodiments certain of the components described herein include similar or common hardware. For example, in some embodiments two sets of circuitries both leverage use of the same processor(s), network interface(s), storage medium(s), and/or the like, to perform their associated functions, such that duplicate hardware is not required for each set of circuitries.

In some embodiments, the processor 402 (and/or co-processor or any other processing circuitry assisting or otherwise associated with the processor) is/are in communication with the memory 404 via a bus for passing information among components of the apparatus 400. In some embodiments, for example, the memory 404 is non-transitory and may include, for example, one or more volatile and/or non-volatile memories. In other words, for example, the memory 404 in some embodiments includes or embodies an electronic storage device (e.g., a computer readable storage medium). In some embodiments, the memory 404 is configured to store information, data, content, applications, instructions, or the like, for enabling the apparatus 400 to carry out various functions in accordance with example embodiments of the present disclosure.

The processor 402 may be embodied in a number of different ways. For example, in some example embodiments, the processor 402 includes one or more processing devices configured to perform independently. Additionally, or alternatively, in some embodiments, the processor 402 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 400, and/or one or more remote or "cloud" processor(s) external to the apparatus 400.

In an example embodiment, the processor 402 is configured to execute instructions stored in the memory 404 or otherwise accessible to the processor. Alternatively, or additionally, the processor 402 in some embodiments is configured to execute hard-coded functionality. As such, whether configured by hardware or software methods, or by a combination thereof, the processor 402 represents an entity (e.g., physically embodied in circuitry) capable of performing operations according to an embodiment of the present disclosure while configured accordingly. Alternatively, or additionally, as another example in some example embodiments, when the processor 402 is embodied as an executor of software instructions, the instructions specifically configure the processor 402 to perform the algorithms embodied in the specific operations described herein when such instructions are executed. In some embodiments, the processor 402 includes hardware, software, firmware, and/or a combination thereof that performs one or more operations described herein.

In some embodiments, the apparatus 400 includes input/output circuitry 406 that provides output to the user and, in some embodiments, to receive an indication of a user input. In some embodiments, the input/output circuitry 406 is in communication with the processor 402 to provide such functionality. The input/output circuitry 406 may comprise one or more user interface(s) and in some embodiments includes a display that comprises the interface(s) rendered as a web user interface, an application user interface, a user device, a backend system, or the like. In some embodiments, the input/output circuitry 406 also includes a keyboard, a mouse, a joystick, a touch screen, touch areas, soft keys a microphone, a speaker, or other input/output mechanisms. The processor 402 and/or input/output circuitry 406 comprising the processor may be configured to control one or more functions of one or more user interface elements through computer program instructions (e.g., software and/or firmware) stored on a memory accessible to the processor (e.g., memory 404, and/or the like). In some embodiments, the input/output circuitry 406 includes or utilizes a user-facing application to provide input/output functionality to a user device and/or other display associated with a user.

In some embodiments, the apparatus 400 includes communications circuitry 408. The communications circuitry 408 includes any means such as a device or circuitry embodied in either hardware or a combination of hardware and software that is configured to receive and/or transmit data from/to a network and/or any other device, circuitry, or module in communication with the apparatus 400. In this regard, in some embodiments the communications circuitry 408 includes, for example, a network interface for enabling communications with a wired or wireless communications network. Additionally, or alternatively in some embodiments, the communications circuitry 408 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 408 includes circuitry for interacting with the antenna(s) and/or other hardware or software to cause transmission of signals via the antenna(s) or to handle receipt of signals received via the antenna(s). In some embodiments, the communications circuitry 408 enables transmission to and/or receipt of data from user device, one or more asset(s) or accompanying sensor(s), and/or other external computing device in communication with the apparatus 400. In some embodiments, one or more of the sets of circuitries perform some or all of the functionality described associated with another component.

In some embodiments, the apparatus 400 includes a dual frequency comb source circuitry 410. The dual frequency comb source circuitry 410 may include hardware components, software components, and/or a combination thereof configured to, with the processor 402, memory 404, input/output circuitry 406 and/or communications circuitry 408, perform one or more functions associated with a dual frequency comb source (such as dual frequency comb source 104 described above with reference to FIGS. 1A-3). In some embodiments, the dual frequency comb source circuitry 410 may be configured to receive and/or transmit data, objects, and/or the like from and/or to one or more components of the apparatus 400, through, for example, the use of applications or APIs executed using a processor, such as the processor 402. It should also be appreciated that, in some embodiments, the dual frequency comb source circuitry 410 may include a separate processor, specially configured field programmable gate array (FPGA), or application specific interface circuit (ASIC) to provide or otherwise facilitate access to such data, objects, and/or the like used by one or more other components of the apparatus 400. The dual frequency comb source circuitry 410 may also provide for communication with other components of the apparatus, system and/or external systems via a network interface provided by the communications circuitry 408.

In some embodiments, the apparatus 400 includes a diode photodetector circuitry 412. The diode photodetector circuitry 412 may include hardware components, software components, and/or a combination thereof configured to, with the processor 402, memory 404, input/output circuitry 406 and/or communications circuitry 408, perform one or more functions associated with a diode photodetector (such as diode photodetector 114 described above with reference to FIGS. 1A-3). In some embodiments, the diode photodetector circuitry 412 may be configured to receive and/or transmit data, objects, and/or the like from and/or to one or more components of the apparatus 400, through, for example, the use of applications or APIs executed using a processor, such as the processor 402. It should also be appreciated that, in some embodiments, the diode photodetector circuitry 412 may include a separate processor, specially configured field programmable gate array (FPGA), or application specific interface circuit (ASIC) to provide or otherwise facilitate access to such data, objects, and/or the like used by one or more other components of the apparatus 400. The diode photodetector circuitry 412 may also provide for communication with other components of the apparatus, system and/or external systems via a network interface provided by the communications circuitry 408.

In some embodiments, the apparatus 400 includes a signal processing circuitry 414. The signal processing circuitry 414 may include hardware components, software components, and/or a combination thereof configured to, with the processor 402, memory 404, input/output circuitry 406 and/or communications circuitry 408, perform one or more functions associated with a signal processing circuitry 414 (such as signal processing circuitry described above with reference to FIGS. 1A-3). In some embodiments, the signal processing circuitry 414 may be configured to receive and/or transmit data, objects, and/or the like from and/or to one or more components of the apparatus 400, through, for example, the use of applications or APIs executed using a processor, such as the processor 402. It should also be appreciated that, in some embodiments, the signal processing circuitry 414 may include a separate processor, specially configured field programmable gate array (FPGA), or application specific interface circuit (ASIC) to provide or otherwise facilitate access to such data, objects, and/or the like used by one or more other components of the apparatus 400. The signal processing circuitry 414 may also provide for communication with other components of the apparatus, system and/or external systems via a network interface provided by the communications circuitry 408.

Additionally or alternatively, in some embodiments, two or more of the sets of circuitries embodying processor 402, memory 404, input/output circuitry 406, communications circuitry 408, dual frequency comb source circuitry 410, diode photodetector circuitry 412, and/or signal processing circuitry 414 are combinable. Alternatively or additionally, in some embodiments, one or more of the sets of circuitry perform some or all of the functionality described associated with another component. For example, in some embodiments, two or more of the sets of circuitry embodied by processor 402, memory 404, input/output circuitry 406, communications circuitry 408, dual frequency comb source circuitry 410, diode photodetector circuitry 412, and/or signal processing circuitry 414 are combined into a single module embodied in hardware, software, firmware, and/or a combination thereof. Similarly, in some embodiments, one or more of the sets of circuitry, for example, dual frequency comb source circuitry 410, diode photodetector circuitry 412, and/or signal processing circuitry 414 is/are combined with the processor 402, such that the processor 402 performs one or more of the operations described above with respect to each of these sets of circuitry embodied by the dual frequency comb source circuitry 410, diode photodetector circuitry 412, and/or signal processing circuitry 414 .

It is also noted that all or some of the information discussed herein can be based on data that is received, generated and/or maintained by one or more components of apparatus 400. In some embodiments, one or more external systems (such as a remote cloud computing and/or data storage system) may also be leveraged to provide at least some of the functionality discussed herein.

### Example Processes of the Disclosure

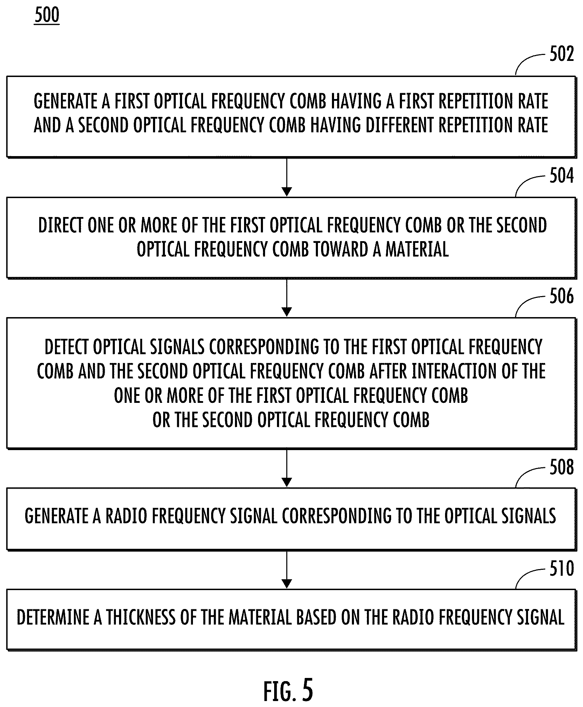

FIG. 5 illustrates an example process 500 for material thickness measurement using dual frequency comb spectroscopy techniques in accordance with at least some example embodiments of the present disclosure. The process 500 may be implemented by one or more computing devices, entities, and/or systems described herein. FIG. 5 illustrates an example process 500 for explanatory purposes. Although the example process 500 depicts a particular sequence of steps/operations, the sequence may be altered without departing from the scope of the present disclosure. For example, some of the steps/operations depicted may be performed in parallel or in a different sequence that does not materially impact the function of the process 500. In other examples, different components of an example device or system that implements the process 500 may perform functions at substantially the same time or in a specific sequence.

In some embodiments, the process 500 includes at step/operation 502, generating, by a dual frequency comb source, a first optical frequency comb having a first repetition rate and a second optical frequency comb having a second repetition rate that is different from the first repetition rate. In some embodiments, the first optical frequency comb and the second optical frequency comb are generated by a dual frequency comb spectrometer comprising the dual frequency comb source.

In some embodiments, one or more of the first optical frequency comb or the second optical frequency comb operate in a wavelength range of 1-2 microns. In some embodiments, one or more of the first optical frequency comb or the second optical frequency comb operate in a wavelength range of 2-9 microns. In some embodiments, one or more of the first optical frequency comb or the second optical frequency comb operate in a wavelength range of 3-6 microns. In some embodiments, one or more of the first optical frequency comb or the second optical frequency comb operate in a wavelength range of 3-6 microns. In some embodiments, one or more of the first optical frequency comb or the second optical frequency comb operate in a wavelength range of 4.5-9 microns. In some embodiments, the dual frequency comb source comprises a fiber-based source. In some embodiments, the dual frequency comb source comprises or a photonic chip-based source. In some embodiments, the photonic chip-based source may comprise one or more silicon nitride waveguides.

In some embodiments, the process 500 includes at step/operation 504, directing, using one or more optical elements, one or more of the first optical frequency comb or the second optical frequency comb toward a material. In some embodiments, directing the one or more of the first optical frequency comb or the second optical frequency comb toward the material comprises propagating both the first optical frequency comb and the second optical frequency comb through the material. In some embodiments, directing the one or more of the first optical frequency comb or the second optical frequency comb toward the material comprises combining the first optical frequency comb and the second optical frequency comb and directing the combined optical frequency combs towards the material.

In some embodiments, the process 500 includes at step/operation 506, detecting, using a diode photodetector, optical signals from the first optical frequency comb and the second optical frequency comb after interaction of one or more of the first optical frequency comb or the second optical frequency comb with the material. For example, the diode photodetector, may detect or otherwise receive light from the first optical frequency comb and the second optical frequency comb after interaction of one or more of the first optical frequency comb or the second optical frequency comb with the material.

In some embodiments, the process 500 includes at step/operation 508, generating, using the diode photodetector, a RF signal corresponding to the optical signals. In some embodiments, the dual frequency comb source is positioned on a first side relative to the material, and the diode photodetector is positioned on a second side relative to the material. In some embodiments, the dual frequency comb source and the diode photodetector are both positioned on a first side relative to the material.

In some embodiments, the process 500 includes at step/operation 510, determining a thickness of the material based on the RF signal. In some embodiments, determining the thickness of the material comprises extracting spectral information from the RF signal, wherein the spectral information comprises one or more of interference fringe pattern or absorption features, and determining the thickness based on the spectral information.

In some embodiments, determining the thickness comprises applying an algorithm configured to select one of an interference-based measurement or absorption-based measurement. In some embodiments, in response to a selection that indicates interference-based measurement, the process 500 may include apply one or more interference algorithms to the RF signal, wherein the one or more interference algorithms is configured to identify interference fringes reflected within the RF signal, and analyze the interference fringes to determine the thickness of the material. In some embodiments, in response to a selection that indicates absorption-based measurement, the process 500 may include applying one or more absorption algorithms to the RF signal, wherein the one or more absorption algorithms is configured to identify absorption features from the RF signal, and analyzing the absorption features to determine the thickness of the material.

### CONCLUSION

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Details regarding various embodiments of the present disclosure are described in the documents in the following pages, which are herein incorporated by reference. Specifically, the documents in the following pages as appendices illustrate various embodiments of the present disclosure.

## Claims

1. A method comprising:
generating, by a dual frequency comb source, a first optical frequency comb having a first repetition rate and a second optical frequency comb having a second repetition rate that is different from the first repetition rate;
directing, using one or more optical elements, one or more of the first optical frequency comb or the second optical frequency comb toward a material;
detecting, using a diode photodetector, optical signals from the first optical frequency comb and the second optical frequency comb after interaction of one or more of the first optical frequency comb or the second optical frequency comb with the material;
generating, using the diode photodetector, an RF signal corresponding to the optical signals; and
determining a thickness of the material based on the RF signal.

2. The method of claim 1, wherein determining the thickness of the material comprises:
extracting spectral information from the RF signal, wherein the spectral information comprises one or more of interference fringe pattern or absorption features; and
determining the thickness based on the spectral information.

3. The method of claim 1, wherein directing the one or more of the first optical frequency comb or the second optical frequency comb toward the material comprises propagating both the first optical frequency comb and the second optical frequency comb through the material.

4. The method of claim 1, wherein directing the one or more of the first optical frequency comb or the second optical frequency comb toward the material comprises:
combining the first optical frequency comb and the second optical frequency comb to generate a combined optical frequency comb; and
directing the combined optical frequency comb towards the material.

5. The method of claim 1, wherein the dual frequency comb source is positioned on a first side relative to the material, and wherein the diode photodetector is positioned on a second side relative to the material.

6. The method of claim 1, wherein the dual frequency comb source and the diode photodetector are both positioned on a first side relative to the material.

7. The method of claim 1, wherein one or more of the first optical frequency comb or the second optical frequency comb operate in a wavelength range of 1-2 microns.

8. The method of claim 1, wherein one or more of the first optical frequency comb or the second optical frequency comb operate in a wavelength range of 2-9 microns.

9. The method of claim 1, wherein the dual frequency comb source is a fiber-based source.

10. The method of claim 1, wherein the dual frequency comb source is a photonic chip-based source.

11. The method of claim 10, wherein the photonic chip-based source comprises one or more silicon nitride waveguides.

12. The method of claim 1, wherein the first optical frequency comb and the second optical frequency comb are generated by a dual frequency comb spectrometer comprising the dual frequency comb source.

13. The method of claim 1, wherein determining the thickness comprises applying a an algorithm configured to select one of an interference-based measurement or absorption-based measurement.

14. The method of claim 13, further comprising:
in response to a selection that indicates interference-based measurement:
applying one or more interference algorithms to the RF signal, wherein the one or more interference algorithms is configured to identify interference fringes reflected within the RF signal; and
analyzing the interference fringes to determine the thickness of the material.

15. A system comprising:
a device configured to generate a first optical frequency comb having a first repetition rate and a second optical frequency comb having a second repetition rate that is different from the first repetition rate;
one or more optical components configured to direct one or more of the first optical frequency comb or the second optical frequency comb toward a material;
a diode photodetector configured to (i) detect optical signals from the first optical frequency comb and the second optical frequency comb after interaction of one or more of the first optical frequency comb or the second optical frequency comb with the material and (ii) generate a RF signal corresponding to the optical signals; and
a signal processor configured to determine thickness of the material based on the RF signal.
